# EUROPEAN PATENT SPECIFICATION

(11) **EP 3 138 813 B1**
(45) Date of publication and mention of the grant of the patent: **27.03.2019**
(21) Application number: 16792485.1
(22) Date of filing: 15.04.2016
(51) Int. Cl.: C01B 32/182, C01B 32/225, C01B 32/19, C01B 32/00

(54) **METHOD FOR MAKING LAMELLAR CARBONACEOUS MATERIAL**
VERFAHREN ZUM HERSTELLEN VON LAMELLAREM KOHLENSTOFFHALTIGEM MATERIAL
PROCÉDÉ DE FABRICATION D'UN MATÉRIAU LAMELLAIRE CARBONÉ

(30) Priority: 12.05.2015 JP 2015097625
(43) Date of publication of application: 08.03.2017
(73) Proprietor: Microwave Chemical Co., Ltd., Osaka-shi, Osaka 559-0025 (JP)
(72) Inventor: KURIHARA, Hideshi, Osaka-shi, Osaka 559-0025 (JP); NAKASHIMA, Mayuko, Osaka-shi, Osaka 559-0025 (JP); MORIKAWA, Satoshi, Osaka-shi, Osaka 559-0025 (JP); TSUKAHARA, Yasunori, Osaka-shi, Osaka 559-0025 (JP)
(74) Representative: Betten & Resch
(86) International application number: PCT/JP2016/062117
(87) International publication number: WO 2016/181760

(56) References cited:
- WO-A1-2013/172350
- WO-A1-2014/061598
- WO-A1-2014/061598
- CN-A- 103 935 997
- JP-A- 2011 184 264
- JP-A- 2014 189 629
- JP-A- 2014 189 629
- IZABELA JANOWSKA ET AL: "Microwave synthesis of large few-layer graphene sheets in aqueous solution of ammonia", NANO RESEARCH, vol. 3, no. 2, 1 February 2010 (2010-02-01), pages 126-137, XP055187807, ISSN: 1998-0124, DOI: 10.1007/s12274-010-1017-1
- V.SRIDHAR ET AL.: 'Synthesis of graphene nano- sheets using eco-friendly chemicals and microwave radiation' CARBON vol. 48, no. 10, August 2010, pages 2953 - 2957, XP055328557

## Description

### Technical Field

The present invention relates to a method for producing a flaky carbon material by irradiating a carbon material in non-ionic solvent with microwaves, and a flaky carbon material produced by the production method.

### Background Art

Conventionally, as a technique for producing graphene by forming a carbon material such as graphite into flakes, there is a peeling method using a Scotch tape (Non-Patent Document 1). Furthermore, there is the Hummers' method or an improved Hummers' method in which graphite is oxidized in water for a long period of time and is further reduced to perform peeling (Non-Patent Document 2). However, these methods require a long period of time for the peeling operation or peeling reaction, and thus they are not efficient.

If graphite is extracted in solvent, graphite having various numbers of layers can be obtained (Non-Patent Document 3). However, the concentration of graphite in solvent is as low as 1% or less, that is, it cannot be assured that this method realizes efficient peeling.

Furthermore, there is a known method for producing a graphene sheet, including: oxidizing a graphitic structure having a turbostratic structure; irradiating the resultant material with microwaves; and performing sonication to separate a graphene sheet (Patent Document 1). This method does not require use of a strong oxidant such as sulfuric acid/potassium permanganate, carboxylic acid, or formic acid, or excessive use of organic solvent harmful to the environment in order to cause additional peeling, but there is a problem that carbon nanofibers have to be prepared in advance.

Also, there is a known method for producing a graphene film, including: setting the substrate temperature to 500°C or less and the pressure to 50 Pa or less; and depositing a transparent conductive carbon film on the substrate surface by a microwave surface wave plasma method in an atmosphere formed by adding an oxidation inhibitor for inhibiting oxidation of the substrate surface as additive gas to carbon-containing gas or mixed gas composed of carbon-containing gas and inert gas (Patent Document 2). This method makes it possible to form a graphene film at a lower temperature and in a shorter time by solving a problem that graphene film formation using conventional thermal CVD requires processing at a high temperature and in a long time, but a plasma CVD reactor that requires high vacuum conditions is still necessary.

As a method for producing a graphene film through plasma decomposition of a carbon source, there is also a known method for producing a graphene film, including: causing a raw material gas composed of a compound at least having carbon and hydrogen to flow over a substrate; and forming surface wave plasma of the raw material gas by microwave excitation on the substrate, thereby producing a graphene film on the substrate (Patent Document 3). However, also in this method, a plasma CVD reactor that requires high vacuum conditions is still necessary.

Also, there is a known method for producing a thin graphene film, including: applying a solution or a dispersion of a conductive polymer to the surface of any metal material selected from copper, cobalt, nickel, and ruthenium to form a coating film; and irradiating the resultant material with microwaves, thereby forming a thin graphene film on the surface of the metal material (Patent Document 4). However, in this method, coating equipment that forms a coating film by applying, to a copper foil or the like, a liquid composition in which a conductive polymer is dissolved or dispersed in solvent is necessary.

Also, there is a known method for producing a graphene film, including: setting the substrate temperature to 200°C to 700°C and the pressure to 50 Pa or less; and depositing a graphene film on the substrate surface by a microwave surface wave plasma CVD method in a gas atmosphere formed by adding helium (He) gas to nitrogen-containing gas or mixed gas composed of carbon-containing gas and an oxidation inhibitor (Patent Document 5). However, also in this method, a plasma CVD reactor that requires high vacuum conditions is still necessary.

Also, there is known flaked graphite oxide composed of one or multiple layers of carbon sheets peeled from graphite, through oxidation by adding sulfuric acid, sodium nitrate, and potassium permanganate to graphite, which is a laminated body of carbon sheets composed of carbon atoms arranged in a shape of a hexagonal lattice, wherein graphite before oxidation is irradiated with microwaves (Patent Document 6). However, in this method, sulfuric acid, sodium nitrate, and potassium permanganate are necessary for oxidation.

Also, there is a known method for producing flaked graphite, including: a step of immersing a carbon material having a graphene layered structure in a liquid containing a liquid material having a surface tension of 50 mN/m or less at 20°C; and a step of irradiating the carbon material immersed in the liquid with electromagnetic waves to heat the carbon material, thereby gasifying the liquid that is in contact with the carbon material to make the carbon material flaky, wherein, in the step of making the carbon material flaky, a reactive compound is chemically bonded to the carbon material (Patent Document 7). However, in this method, the temperature has to increase in accordance with progress of gasification of liquid, and thus, not only is the carbon material made flaky, but also the carbon material forms an aggregate due to the heat.

WO2014061598A1 describes a simple method for manufacturing a flaked graphite derivative is provided. A method for manufacturing a flaked graphite derivative provided with: a step for preparing a mixture containing flaked graphite and a reactive compound for grafting to the flaked graphite by irradiation of an active energy ray; and a step for grafting the reactive compound to the flaked graphite by irradiating an active energy ray onto the mixture.

JP2014189629A describes a material modification method that enables material modification through electron beam irradiation without using an electron beam irradiation device. There is provided a material modification method through electron beam irradiation. In the method, raw material comprising carbon material of a graphene structure is subjected to microwave irradiation or induction heating while simultaneously subjected to voltage application, so that an electron beam is generated in the raw material.

CN103935997A describes the field of graphene production and particularly relates to a method for producing graphene from sodium dodecylbenzene sulfonate. The preparation method is characterized by comprising the following steps: (1) weighing, (2) mixing, (3) stirring, (4) microwave heating, (5) cooling, (6) filtering and (7) drying, wherein expandable graphite, N-methyl pyrrolidone, sodium dodecyl benzene sulfonate and ethanol are taken as raw materials. The graphene prepared by this method, on the one hand, has higher quality, on the other hand, and can also have higher yield, thereby contributing to realizing the large-scale and industrial production of grapheme, so that the method has broad application prospect, high practicability and application value and the advantages of low price of raw materials and simple preparation process.

Izabela Janowska et. al., "Microwave synthesis of large few-layer graphene sheets in aqueous solution of ammonia", Nano Research, vol. 3, no. 2, 1 February 2010 (2010-02-01), pages 126-137, XP055187807, ISSN: 1998-0124, DOI: 10.1007/s12274-010-1017-1 describes few-layer graphene (FLG) sheets with sizes exceeding several micrometers which have been synthesized by exfoliation of expanded graphite in aqueous solution of ammonia under microwave irradiation, with an overall yield approaching 8 wt.%. Transmission electron microscopy (in bright-field and dark-field modes) together with electron diffraction patterns and atomic force microscopy confirmed that this graphene material consisted mostly of mono-, bi- or few-layer graphene (less than ten layers). The high degree of surface reduction was confirmed by X-ray photoelectron and infrared spectroscopies. In addition, the high stability of the FLG in the liquid medium facilitates the deposition of the graphene material onto several substrates via low-cost solution-phase processing techniques, opening the way to subsequent applications of the material.

### Citation List

### Patent Document

Patent Document 1: JP 2012-509248A (Tokuhyo)
Patent Document 2: JP 2012-162442A
Patent Document 3: JP 2013-159521A
Patent Document 4: JP 2013-87023A
Patent Document 5: JP 2013-249530A
Patent Document 6: JP 2013-212948A
Patent Document 7: International Publication No. 2014/163127

### Non-Patent Document

Non-Patent Document 1: Nature Materials, (2007), 6(3), p. 183-191
Non-Patent Document 2: Nature, (2006), 442(7100), p. 282-286
Non-Patent Document 3: Nature Nanotechnology, (2009), 4(4), p. 217-224

### Summary of Invention

### Technical Problem

As described above, there is a demand for efficient production of a flaky carbon material, without causing reaction with strong acid or oxidant for a long period of time, and without using large-scale equipment such as high vacuum equipment or coating apparatuses.

The present invention was made in these circumstances, and it is an object thereof to provide, for example, a method for producing a flaky carbon material, with which a carbon material having a layered structure can be peeled more easily and efficiently than in conventional examples.

### Solution to Problem

The present inventors conducted an in-depth study in order to achieve the above-described object, and found that it is possible to produce a flaky carbon material, by irradiating a carbon material in non-ionic solvent with microwaves and heating the carbon material in such a manner that the non-ionic solvent that is in contact with the carbon material is not gasified, and thus the present invention was completed.

The present invention is defined in claim 1. The dependent claims define advantageous embodiments thereof.

### Advantageous Effects of Invention

With the flaky carbon material and the method for producing the same according to the present invention, a flaky carbon material is peeled by irradiating a carbon material in non-ionic solvent with microwaves, and thus it is possible to efficiently produce a flaky carbon material without using large-scale equipment such as high vacuum equipment or coating apparatuses and without causing reaction with strong acid or oxidant for a long period of time. Since the non-ionic solvent that is in contact with the carbon material is not boiled, the peeled flaky carbon material can be prevented from forming an aggregate. Since the peeling is performed in non-ionic solvent, even when the solvent enters a gap between layers that have not been peeled, it is possible to easily remove the solvent without leaving impurities, through subsequent drying.

### Brief Description of Drawings

FIG. 1 is a table showing results of examples.
FIG. 2 is a table showing results of comparative examples.
FIG. 3 is a graph showing a relationship between the flaky carbon boiling point of the non-ionic solvent.
   [7] The method for producing a flaky carbon material according to [6], wherein, in the step of peeling a flaky carbon material, the carbon material is heated in such a manner that a temperature of the non-ionic solvent at a measurement position is at least 5°C lower than the boiling point of the non-ionic solvent.
   [8] The method for producing a flaky carbon material according to any one of [1] to [7], wherein the non-ionic solvent contains cyclic hydrocarbon solvent or cyclic hydrocarbon derivative solvent.
   [9] A flaky carbon material obtained by the method for producing a flaky carbon material according to any one of [1] to [8].

### Advantageous Effects of Invention

With the flaky carbon material and the method for producing the same according to the present invention, a flaky carbon material is peeled by irradiating a carbon material in non-ionic solvent with microwaves, and thus it is possible to efficiently produce a flaky carbon material without using large-scale equipment such as high vacuum equipment or coating apparatuses and without causing reaction with strong acid or oxidant for a long period of time. Since the non-ionic solvent that is in contact with the carbon material is not boiled, the peeled flaky carbon material can be prevented from forming an aggregate. Since the peeling is performed in non-ionic solvent, even when the solvent enters a gap between layers that have not been peeled, it is possible to easily remove the solvent without leaving impurities, through subsequent drying.

### Brief Description of Drawings

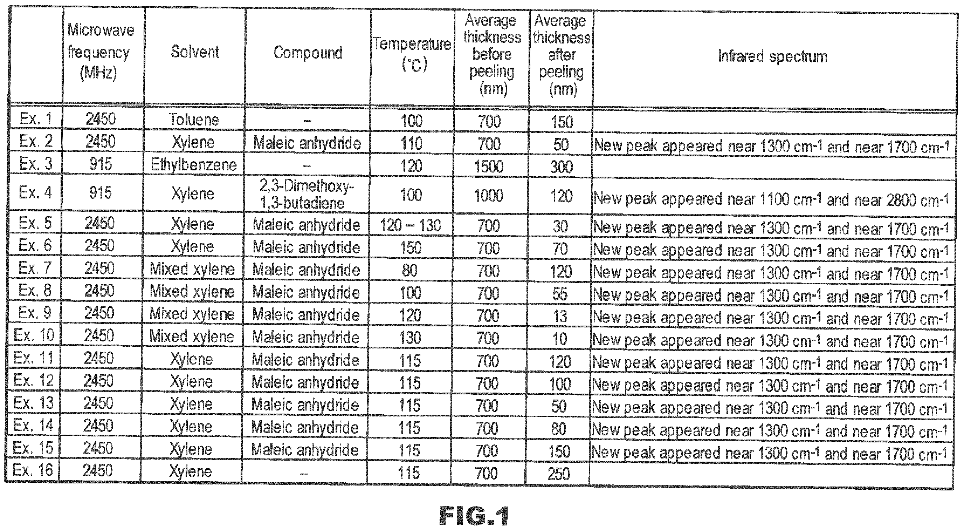

FIG. 1 is a table showing results of examples.

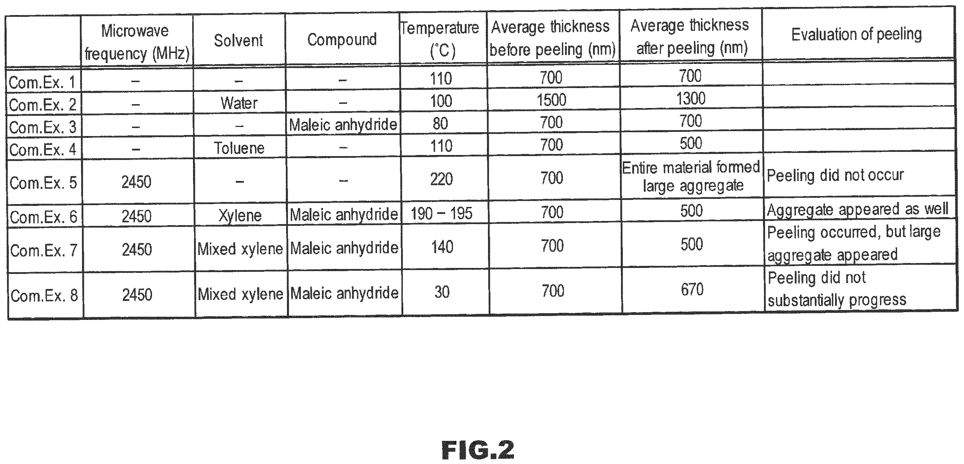

FIG. 2 is a table showing results of comparative examples.

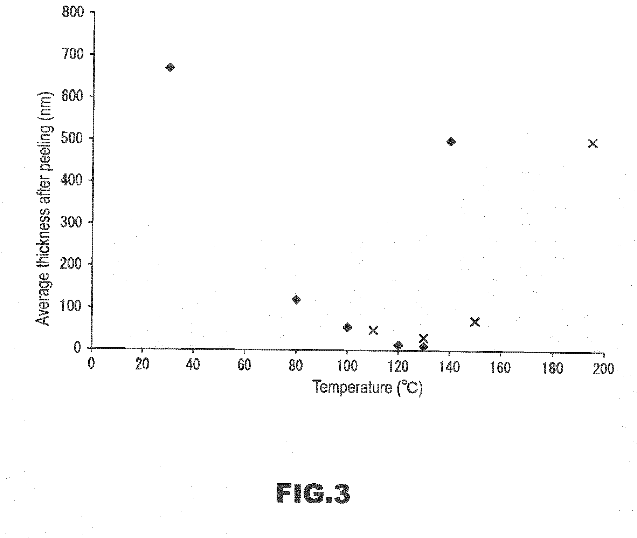

FIG. 3 is a graph showing a relationship between the flaky carbon material thickness and the temperature in Examples 2 and 5 to 10 and Comparative Examples 6 to 8.

### Description of Embodiment

Hereinafter, a method for producing a flaky carbon material will be described, the method including: a step of immersing a carbon material having a layered structure in non-ionic solvent; and a step of irradiating the carbon material in the non-ionic solvent with microwaves, thereby heating the carbon material in such a manner that the non-ionic solvent that is in contact with the carbon material is not gasified, increasing spacing between layers of the carbon material, and peeling a flaky carbon material.

It is sufficient that the carbon material having a layered structure is a solid material whose constituent element substantially includes carbon, at least partially having a layered structure. The layered structure is a graphene layered structure. That is to say, it is sufficient that the carbon material having a layered structure is a material at least partially having a graphene layer structure. There is no particular limitation on the carbon material having a layered structure, and examples thereof include graphite, multi-layered graphene, carbon black, carbon fiber, and the like. Note that even an amorphous carbon material such as carbon black or carbon fiber partially contains a graphene structure, and thus graphene may be peeled therefrom. If the carbon material is carbon black or carbon fiber, a higher degree of graphitization is more preferable. It is preferable to use graphite as the carbon material. The graphite may be natural graphite, or may be artificial graphite. The graphite may also be expanded graphite obtained by extending the distance between layers.

The non-ionic solvent is solvent that is not ionic. The non-ionic solvent may be considered to be solvent not having a functional group that is likely to be ionized. The non-ionic solvent may be considered to be covalent solvent. The non-ionic solvent may be solvent having an affinity for the carbon material, or may be solvent whose affinity therefor is poor. The non-ionic solvent may be non-ionic organic solvent, or may be non-ionic inorganic solvent. For example, the non-ionic organic solvent may be cyclic compound solvent, may contain cyclic compound solvent, or may be other solvent. For example, the cyclic compound solvent may be cyclic hydrocarbon solvent such as aromatic hydrocarbon or alicyclic hydrocarbon, may be cyclic hydrocarbon derivative solvent such as aromatic hydrocarbon derivatives or alicyclic hydrocarbon derivatives, may be heterocyclic compound solvent, or may be other solvent. There is no particular limitation on the aromatic hydrocarbon, and examples thereof include benzene, toluene, xylene, and ethylbenzene. For example, the alicyclic hydrocarbon may or may not be cycloalkane. There is no particular limitation on the cycloalkane, and examples thereof include cyclohexane. There is no particular limitation on the cyclic hydrocarbon derivative solvent, and examples thereof include 1,2-dichlorobenzene and benzylamine. There is no particular limitation on the heterocyclic compound solvent, and examples thereof include N-methylpyrrolidone and tetrahydrofuran. There is no particular limitation on the non-ionic organic solvent other than the cyclic compound solvent, and examples thereof include alcohol such as methanol, ethanol, propanol, and butanol, glycol such as ethylene glycol, propylene glycol, and butylene glycol, acetone, dimethylformamide, N,N-dimethylacetamide, dimethylsulfoxide, dichloromethane, 1,2-dichloroethane, and hexamethylphosphoramide. There is no particular limitation on the non-ionic inorganic solvent, and examples thereof include water. The non-ionic solvent is preferably cyclohexane, toluene, xylene, ethylbenzene, water, ethylene glycol, N-methylpyrrolidone, hexamethylphosphoramide, or benzylamine, and more preferably toluene, xylene, ethylbenzene, N-methylpyrrolidone, or benzylamine. The reason for this is that, since each layer of the graphene structure contained in the carbon material is constituted by closely arranged hexagonal cells, organic solvent having a cyclic structure such as cyclic compound solvent seems to be more likely to enter gaps between layers. The non-ionic solvent may be used alone or as a mixture of multiple types. There is no limitation on the amount of non-ionic solvent, but it is preferably an amount that allows the carbon material that is to be irradiated with microwaves to be completely immersed in the non-ionic solvent. However, a larger amount of non-ionic solvent lowers the heating efficiency, and thus it is preferable that the amount of non-ionic solvent is not more than necessary.

After the carbon material is immersed in the non-ionic solvent, they may be mixed with each other. As the method for mixing the carbon material and the solvent, known methods may be used. It is sufficient that the mixing is performed such that a uniform state is apparently realized, and there is no limitation on the mixing method. That is to say, they may be mixed with each other using a mixer, may be mixed by being stirred together with a medium such as glass beads, may be mixed by being allowed to pass through a narrow gap at high speed, or may be dispersed using ultrasonic waves. The mixer may be, for example, a mixer having stirring blades.

There is no particular limitation on the frequency of microwaves for irradiation on the carbon material, and examples thereof include 2.45 GHz, 5.8 GHz, 24 GHz, 915 MHz, and other frequencies in the range of 300 MHz to 300 GHz. That is to say, the microwaves may be electromagnetic waves having a wavelength of 1 mm to 1 m. There is no particular limitation on the power (intensity) of the microwaves. It is preferable to select an optimal power according to the scale of a system that performs microwave irradiation, specifically according to the amount of carbon material that is to be irradiated with microwaves and the size of the reactor.

The microwave irradiation may be continuously performed, or may be intermittently performed such that irradiation and halt are repeated. When the carbon material is irradiated with microwaves, the temperature of the carbon material and the non-ionic solvent increases. The intensity of the microwave irradiation may be adjusted such that the temperature is kept constant, the temperature may be allowed to fluctuate while keeping the intensity of the microwave irradiation constant, or the intensity of the microwave irradiation may be frequently changed. It is desirable to select an irradiation method that provides a large peeling effect. Note that, in any case, the carbon material has to be heated in the range where the non-ionic solvent that is in contact with the carbon material is not gasified. The microwave irradiation may be performed in a single mode or a multi-mode. Since the carbon material that is to be irradiated with microwaves is immersed in the non-ionic solvent, the gasifying the non-ionic solvent that is in contact with the carbon material seems to mean boiling the non-ionic solvent. Accordingly, it is preferable that the microwave irradiation is performed in such a manner that the temperature of the non-ionic solvent that is in contact with the carbon material does not reach the boiling point.

When the carbon material in the non-ionic solvent is irradiated with microwaves, the temperature of the non-ionic solvent increases. The temperature may be measured, for example, using a known thermometer such as a thermocouple-type thermometer, an infrared fiber-type thermometer, or a mercury or other organic liquid-in-glass thermometer. If the temperature of the solvent measured using such a thermometer is equal to or greater than the boiling point of the solvent, the solvent is actively gasified, the carbon material peeled by microwave irradiation forms an aggregate, and the peeling effect is lowered. It seems that, in the case where the carbon material is heated by microwaves and the solvent between layers thereof is gasified, typically, the gasification does not uniformly occur, but the degree of gasification differs from point to point. As a result of this difference, spacing between layers increases at one portion of the layers, whereas spacing between layers does not increase at another portion, so that peeling occurs only at the one portion, and the size of the peeled flaky carbon material may become smaller. Accordingly, it is preferable that the carbon material is heated in such a manner that the temperature of the non-ionic solvent that is in contact with the carbon material is lower than the boiling point. Note that the temperature is measured preferably near the carbon material, but, in the strict sense, it is difficult to measure the temperature of the solvent that is in contact with the carbon material. Meanwhile, when the solvent is gasified, bubbles are generated in the solvent that is in contact with the carbon material. Accordingly, it is possible to determine whether or not the solvent that is in contact with the carbon material is gasified, by visually checking whether or not bubbles of the solvent, that is, bubbles generated by gasification are present on the surface of the carbon material. If it is difficult to determine whether or not bubbles have been generated, due to the influence of stirring by a stirrer provided in the reactor, the stirrer is preferably temporarily stopped during the check. The influence on the peeling caused by stopping the stirrer seems to be small. It is assumed that the temperature measured when it is thus determined that gasification of the solvent that is in contact with the carbon material has been started is "solvent boiling point - a" (°C). In this case, it is desirable that microwave irradiation is performed in such a manner that the temperature measured using the thermometer is lower than "solvent boiling point - α" (°C), where α is a real number of 0 or more. Although depending on the type of solvent, α seems to be smaller than 5°C. Thus, for example, in the step of peeling a flaky carbon material, the carbon material may be heated in such a manner that the temperature of the non-ionic solvent measured at measurement position (e.g., the position of the thermometer) is at least 5°C lower than the boiling point of the non-ionic solvent. If the difference between the measured temperature and the temperature of the solvent that is in contact with the flaky carbon material is larger, for example, the carbon material may be heated in such a manner that the measured temperature of the non-ionic solvent is at least 10°C lower than the boiling point of the non-ionic solvent. Note that, if the difference between the temperature of the non-ionic solvent that is in contact with the carbon material and the temperature of the non-ionic solvent measured at the measurement position has been eliminated by stirring or the like, that is, if α is substantially 0, it is possible to heat the carbon material in such a manner that the temperature of the non-ionic solvent that is in contact with the carbon material is lower than the boiling point, by irradiating the carbon material with microwaves in such a manner that the temperature of the non-ionic solvent measured at the measurement position is lower than the boiling point. If gasification of the solvent is suppressed in this manner, the possibility that the flaky carbon material forms an aggregate in accordance with the gasification of the solvent can be lowered, so that the peeling effect can be increased.

Note that a higher temperature of the solvent makes it easier to facilitate the peeling resisting the van der Waals forces between layers of the carbon material, and thus, in order to facilitate the peeling, it is desirable to perform heating such that the non-ionic solvent has a high temperature in the range where the non-ionic solvent that is in contact with the carbon material is not gasified. Accordingly, from this point of view, the temperature of the solvent is preferably higher than room temperature, more preferably 50°C or more, and even more preferably 100°C or more. Meanwhile, regarding the Diels-Alder reaction (described later), over the equilibrium temperature, a higher temperature is more likely to allow the reverse reaction to progress, and thus, in order to facilitate the Diels-Alder reaction, it is preferable that the temperature of the solvent does not exceed the equilibrium temperature. Note that the equilibrium temperature refers to a temperature at which the forward reaction proceeds at the same rate as the reverse reaction. If the compound that will be described later is maleic anhydride, the equilibrium temperature is 120 to 130°C.

Furthermore, the step of peeling a flaky carbon material is performed typically at normal pressure, but, if necessary, it may be performed under increased pressure or under reduced pressure. In view of handling, the normal pressure is desirable. If the pressure is not the normal pressure, the solvent boiling point is the boiling point at that pressure.

When the carbon material in the non-ionic solvent is irradiated with microwaves, the carbon material is heated, as a result of which the non-ionic solvent that has entered gaps between layers of the carbon material is heated. Due to a thermal motion of the heated solvent, spacing between layers increases, the van der Waals forces between the layers are reduced, and thus the flaky carbon material is peeled from the carbon material. At that time, if the solvent between the layers is gasified, not only is the carbon material made flaky, but also the flaked carbon material forms an aggregate due to the heat. It seems that, if the solvent between the layers is gasified, there is no liquid-phase solvent between the layers, and thus the temperature of the carbon material may rapidly increase due to microwave irradiation, and the carbon material forms an aggregate in accordance with the increase in the temperature. Accordingly, it is important to heat the carbon material in the non-ionic solvent in such a manner that the non-ionic solvent is not gasified.

The flaky carbon material may be graphene, or may be multiple layers of graphene. The number of layers of graphene may be one, or may be multiple. For example, the number of layers of the flaky carbon material is preferably 1000 or less, more preferably 500 or less, and even more preferably 100 or less. The flaky carbon material may be considered to be flaked graphite. For example, the flaky carbon material may be a graphene sheet, or may be a graphene flake. Since the flaky carbon material is obtained by peeling the carbon material that is the raw material, the thickness of the flaky carbon material is smaller than that of the carbon material that is the raw material.

In the step of peeling a flaky carbon material, a compound may be bonded to an end of the layered structure of the carbon material. If the compound is bonded to an end of the layered structure, that is, an end of graphene contained in the carbon material, the distance between layers of graphene at that end of graphene can be increased. As a result, the non-ionic solvent is likely to enter a gap between the layers, and the peeling of the carbon material is facilitated. As the compound that reacts with the carbon material, a compound that reacts with a double bond in the carbon material is preferable. Furthermore, in order to form a covalent bond, it is preferable that the compound is not ionic either. The compound and the end of the layered structure of the carbon material may be bonded to each other through the Diels-Alder reaction. That is to say, the compound may be a compound having a Diels-Alder reactivity. There is no particular limitation on the compound having a Diels-Alder reactivity, and example thereof may include at least one selected from the group consisting of maleic anhydride, tetracyanoethylene, 2,3-dimethoxy-1,3-butadiene, 9-methylanthracene, quinodimethane, 5,6-bismethylene-1,3-cyclohexanediene, and 3,6-bismethylene-1,4-cyclohexadiene. It is assumed that, if such a compound having a Diels-Alder reactivity is bonded to an end of graphene contained in the carbon material, the distance (about 0.3 nm) between layers of graphene contained in graphite is slightly increased at that end, and thus the peeling is facilitated. It is known that, for example, maleic anhydride, tetracyanoethylene, 2,3-dimethoxy-1,3-butadiene, 9-methylanthracene, and the like are likely to be bonded to an end of graphene contained in the layered structure of the carbon material.

The amount of compound that is mixed with the non-ionic solvent is preferably 100 parts by weight or less, and more preferably 60 parts by weight or less, with respect to 100 parts by weight of carbon material. The reason for this is that, if the amount of compound is large, the peeled flaky carbon material may form an aggregate due to that compound. If the amount of compound that is mixed with the non-ionic solvent is more than 100 parts by weight with respect to 100 parts by weight of carbon material, the peeling may partially progress, but an excessive amount of compound makes the flaky carbon material after the peeling to form a large aggregate, which is not preferable. If the amount of compound that is mixed with the non-ionic solvent is 0.01 parts by weight or more with respect to 100 parts by weight of carbon material, the peeling of the carbon material when it is irradiated with microwaves is facilitated. If the amount of compound is 10 parts by weight or more with respect to 100 parts by weight of carbon material, the effect of facilitating the peeling of the carbon material when it is irradiated with microwaves is large, which is preferable. The compound may be mixed with the non-ionic solvent before the carbon material is immersed in the non-ionic solvent, or may be mixed with the non-ionic solvent after the carbon material is immersed in the non-ionic solvent, for example. The mixing of the non-ionic solvent and the compound may be performed by adding the compound to the non-ionic solvent. The mixing of the compound and the solvent may be performed before the heating with microwaves is started, or may be performed after the heating is started. The mixing may be realized by, for example, stirring mixing or shear mixing.

Since microwave irradiation is performed such that the non-ionic solvent is not boiled, the flaky carbon material after the peeling is obtained in a state of being dispersed in the non-ionic solvent. The flaky carbon material dispersed in the non-ionic solvent can be ordinarily handled. The flaky carbon material can be separated from the non-ionic solvent, for example, using known techniques such as filtration, centrifugal separation, or drying.

As described above, with the method for producing a flaky carbon material, and the flaky carbon material produced by the production method according to the present invention, since the flaky carbon material is peeled in the non-ionic solvent, even when the non-ionic solvent enters a gap between layers that have not been peeled, it is possible to easily remove the solvent, through subsequent heating or the like. For example, if peeling is performed using ionic solvent containing lithium ions or the like, the lithium ions or the like remains between layers that have not been peeled, and thus the characteristics of the peeled flaky carbon material change, whereas, in the case of using non-ionic solvent, such a problem can be avoided, so that a flaky carbon material having a high quality can be obtained. If a compound that is to be bonded to an end of the layered structure of the carbon material is used, spacing between layers can be increased at that end, and thus the non-ionic solvent is likely to enter a gap between the layers of the graphene structure. As a result, the peeling of the flaky carbon material is facilitated. If the amount of compound that is mixed with the non-ionic solvent is not made large, the peeled flaky carbon material can be prevented from forming an aggregate due to the compound.

In the description above, the case was described in which the method for producing a flaky carbon material includes a step of immersing the carbon material in the non-ionic solvent, but there is no limitation to this. If a carbon material that is immersed in the non-ionic solvent is prepared in advance, the flaky carbon material may be peeled by irradiating that carbon material with microwaves. In this manner, the method for producing a flaky carbon material may not include a step of immersing the carbon material in the non-ionic solvent.

### Examples and Comparative Examples

Hereinafter, the present invention will be described in detail by way of examples, but these example are merely examples and the present invention is not limited to these examples. Note that values in the examples and the comparative examples were obtained by the following methods. It is assumed that, in the examples and the comparative examples, "parts" refers to a proportion expressed by weight (parts by weight).

### (1) Evaluation of Peeling from Carbon Material

A carbon material before peeling and the carbon material after the peeling (flaky carbon material) were evaluated through observation using a scanning electron microscope (apparatus: manufactured by JEOL Ltd., JSM-IT300). The carbon material before peeling had a plate-like shape, and an average thickness of the carbon material before peeling and an average thickness of the flaky carbon material after the peeling were compared. Note that the average thickness is an average obtained by measuring the thicknesses of ten pieces of carbon material each before and after peeling.

### (2) Evaluation of Reaction with Carbon Material

A reaction obtained by adding a compound that reacts with the carbon material and performing microwave irradiation was evaluated using infrared spectroscopy (apparatus: manufactured by Shimadzu Corporation, IRAffinity-1). The sample was washed with guaranteed reagent acetone and hardened by drying, and was subjected to measurement.

### Example 1

In this example, 10 parts of expanded graphite and 100 parts of toluene were well mixed, and the mixture was placed in a stirrer-attached reactor. Microwave irradiation at 2450 MHz was performed at 2 W for 10 minutes, so that the temperature was increased from room temperature to 100°C. After the temperature reached 100°C, microwave irradiation was performed for another one hour so as to keep the internal temperature at 100°C. During this treatment, generation of bubbles was not seen. Toluene has a boiling point of about 111°C, which means that the solvent was heated in the range of a temperature lower than the boiling point. Accordingly, it seems that the solvent located between layers of the carbon material was not gasified. Then, microwave irradiation was stopped, and the temperature was cooled down to room temperature, after which a solid material in the reactor was taken out and subjected to evaluation. FIG. 1 shows the results where it is seen that the peeling had progressed.

### Example 2

In this example, 10 parts of expanded graphite and 100 parts of o-xylene were well mixed, and the mixture was placed in a stirrer-attached reactor. Microwave irradiation at 2450 MHz was performed at 1.5 W for 15 minutes, so that the temperature was increased from room temperature to 110°C. After the temperature reached 110°C, microwave irradiation was performed for another 30 minutes so as to keep the internal temperature at 110°C. Then, 5 parts of maleic anhydride was added, and the mixture was well stirred, after which microwave irradiation was performed for another one hour at an internal temperature of 110°C. During this treatment, generation of bubbles was not seen. o-Xylene has a boiling point of about 144°C, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed.

### Example 3

In this example, 10 parts of natural graphite and 10 parts of ethylbenzene were well mixed, and the mixture was placed in a stirrer-attached reactor. Microwave irradiation at 915 MHz was performed at 5 W for 30 seconds. After one minute, microwave irradiation was performed again at 5 W for 30 seconds. Taking the treatment "performing microwave irradiation at 5 W for 30 seconds and halting for one minute" as one cycle, 20 cycles in total were performed. During this treatment, the internal temperature was increased from room temperature to 120°C. Generation of bubbles was not seen. Ethylbenzene has a boiling point of about 136°C, which means that the solvent was heated in the range of a temperature lower than the boiling point. Accordingly, it seems that the solvent located between layers of the carbon material was not gasified. After 20 cycles were ended, the temperature was cooled down to room temperature, and a solid material in the reactor was taken out and subjected to evaluation. FIG. 1 shows the results where it is seen that the peeling had progressed.

### Example 4

In this example, 10 parts of synthetic graphite and 50 parts of p-xylene were well mixed, and 5 parts of 2,3-dimethoxy-1,3-butadiene was further added thereto, after which the mixture was placed in a stirrer-attached reactor. Taking the treatment "performing microwave irradiation at 915 MHz at 2 W for 20 seconds and halting for two minutes" as one cycle, 50 cycles in total were performed. During this treatment, the internal temperature was increased to 100°C. Furthermore, microwave irradiation was continuously performed for one hour so as to keep the internal temperature at 100°C. Generation of bubbles was not seen. p-Xylene has a boiling point of about 138°C, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed.

### Example 5

In this example, 10 parts of expanded graphite, 20 parts of o-xylene, and 1 part of maleic anhydride were well mixed, and the mixture was placed in a stirrer-attached jacketed reactor. Microwave irradiation at 2450 MHz was continuously performed at 2 W for 10 minutes, so that the temperature was increased to 120°C. After the internal temperature reached 120°C, 2 parts of maleic anhydride was added and well mixed. Taking the treatment "performing microwave irradiation at 1 W for 30 seconds and halting for two minutes" as one cycle, 30 cycles in total were repeated. During this treatment, when the internal temperature exceeded 130°C, the jacket was cooled down, so that the internal temperature was decreased to 120°C. During 30 cycles, generation of bubbles was not seen. o-Xylene has a boiling point of about 144°C, which means that the solvent was heated in the range of a temperature lower than the boiling point. Accordingly, it seems that the solvent located between layers of the carbon material was not gasified. After 30 cycles were ended, the temperature was cooled down to room temperature, and a solid material in the reactor was taken out and subjected to evaluation. FIG. 1 shows the results where it is seen that the peeling had progressed.

### Example 6

In this example, 10 parts of expanded graphite, 20 parts of p-xylene, and 1 part of maleic anhydride were well mixed, and the mixture was placed in a stirrer-attached reactor. The pressure inside the reactor was increased to 0.3 MPa, using N₂ gas. Then, microwave irradiation at 2450 MHz was performed, so that the internal temperature of the reactor was kept at 150°C. The reaction was caused to occur for one hour while keeping the temperature at 150°C. During this treatment, the stirrer was stopped for five minutes and the bubbling status was observed, but generation of bubbles was not seen. p-Xylene at a pressure inside the reactor of 0.3 MPa has a boiling point of near 185°C, and, furthermore, generation of bubbles was not seen, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed.

### Example 7

In this example, 10 parts of expanded graphite and 100 parts of mixed xylene were well mixed, and the mixture was placed in a stirrer-attached reactor. Microwave irradiation at 2450 MHz was performed at 1.5 W for 10 minutes, so that the temperature was increased from room temperature to 80°C. After the temperature reached 80°C, microwave irradiation was performed for another 30 minutes so as to keep the internal temperature at 80°C. Then, 5 parts of maleic anhydride was added, and the mixture was well stirred, after which microwave irradiation was performed for another one hour at an internal temperature of 80°C. During this treatment, generation of bubbles was not seen. The mixed xylene has a boiling point of about 136°C, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed. Note that 100 parts of mixed xylene used in this example comprised 12 parts of o-xylene, 30 parts of m-xylene, 15 parts of p-xylene, and 43 parts of ethylbenzene.

### Example 8

In this example, 10 parts of expanded graphite and 100 parts of mixed xylene were well mixed, and the mixture was placed in a stirrer-attached reactor. Microwave irradiation at 2450 MHz was performed at 2 W for 10 minutes, so that the temperature was increased from room temperature to 100°C. After the temperature reached 100°C, microwave irradiation was performed for another 20 minutes so as to keep the internal temperature at 100°C. Then, 3 parts of maleic anhydride was added, and the mixture was well stirred, after which microwave irradiation was performed for another 1.5 hours at an internal temperature of 100°C. During this treatment, generation of bubbles was not seen. The mixed xylene has a boiling point of about 136°C, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed. Note that the mixed xylene used in this example was the same as that in Example 7.

### Example 9

In this example, 25 parts of expanded graphite and 100 parts of mixed xylene were well mixed, and the mixture was placed in a stirrer-attached reactor. Microwave irradiation at 2450 MHz was performed at 2.5 W for 20 minutes, so that the temperature was increased from room temperature to 120°C. After the temperature reached 120°C, microwave irradiation was performed for another 30 minutes so as to keep the internal temperature at 120°C. Then, 6 parts of maleic anhydride was added, and the mixture was well stirred, after which microwave irradiation was performed for another one hour at an internal temperature of 120°C. During this treatment, generation of bubbles was not seen. The mixed xylene has a boiling point of about 136°C, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed. Note that the mixed xylene used in this example was the same as that in Example 7.

### Example 10

In this example, 20 parts of expanded graphite and 100 parts of mixed xylene were well mixed, and the mixture was placed in a stirrer-attached reactor. Microwave irradiation at 2450 MHz was performed at 3.5 W for 10 minutes, so that the temperature was increased from room temperature to 130°C. After the temperature reached 130°C, microwave irradiation was performed for another 20 minutes so as to keep the internal temperature at 130°C. Then, 3 parts of maleic anhydride was added, and the mixture was well stirred, after which microwave irradiation was performed for another 1.5 hours at an internal temperature of 130°C. During this treatment, generation of bubbles was not seen. The mixed xylene has a boiling point of about 136°C, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed. Note that the mixed xylene used in this example was the same as that in Example 7.

### Example 11

In this example, 20 parts of expanded graphite and 200 parts of p-xylene were well mixed, and 0.6 parts of maleic anhydride was further added and mixed therewith, after which microwave irradiation at 2450 MHz was performed at 3 W for 30 minutes, so that the temperature was increased from room temperature to 115°C. After the temperature reached 115°C, microwave irradiation was performed for another 30 minutes so as to keep the internal temperature at 115°C. During this treatment, generation of bubbles was not seen. p-Xylene has a boiling point of about 138°C, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed.

### Example 12

In this example, 20 parts of expanded graphite and 200 parts of p-xylene were well mixed, and 2 parts of maleic anhydride was further added and mixed therewith, after which microwave irradiation at 2450 MHz was performed at 3 W for 30 minutes, so that the temperature was increased from room temperature to 115°C. After the temperature reached 115°C, microwave irradiation was performed for another 30 minutes so as to keep the internal temperature at 115°C. During this treatment, generation of bubbles was not seen. p-Xylene has a boiling point of about 138°C, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed.

### Example 13

In this example, 20 parts of expanded graphite and 200 parts of p-xylene were well mixed, and 4 parts of maleic anhydride was further added and mixed therewith, after which microwave irradiation at 2450 MHz was performed at 3 W for 30 minutes, so that the temperature was increased from room temperature to 115°C. After the temperature reached 115°C, microwave irradiation was performed for another 30 minutes so as to keep the internal temperature at 115°C. During this treatment, generation of bubbles was not seen. p-Xylene has a boiling point of about 138°C, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed.

### Example 14

In this example, 20 parts of expanded graphite and 200 parts of p-xylene were well mixed, and 12 parts of maleic anhydride was further added and mixed therewith, after which microwave irradiation at 2450 MHz was performed at 3 W for 30 minutes, so that the temperature was increased from room temperature to 115°C. After the temperature reached 115°C, microwave irradiation was performed for another 30 minutes so as to keep the internal temperature at 115°C. During this treatment, generation of bubbles was not seen. p-Xylene has a boiling point of about 138°C, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed.

### Example 15

In this example, 20 parts of expanded graphite and 200 parts of p-xylene were well mixed, and 20 parts of maleic anhydride was further added and mixed therewith, after which microwave irradiation at 2450 MHz was performed at 3 W for 30 minutes, so that the temperature was increased from room temperature to 115°C. After the temperature reached 115°C, microwave irradiation was performed for another 30 minutes so as to keep the internal temperature at 115°C. During this treatment, generation of bubbles was not seen. p-Xylene has a boiling point of about 138°C, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed.

### Example 16

In this example, 20 parts of expanded graphite and 200 parts of p-xylene were well mixed, and microwave irradiation at 2450 MHz was performed at 3 W for 30 minutes, so that the temperature was increased from room temperature to 115°C. After the temperature reached 115°C, microwave irradiation was performed for another 30 minutes so as to keep the internal temperature at 115°C. During this treatment, generation of bubbles was not seen. p-Xylene has a boiling point of about 138°C, which means that the solvent was heated in the range of a temperature lower than the boiling point. Accordingly, it seems that the solvent located between layers of the carbon material was not gasified. Then, the temperature was cooled down to room temperature, and a solid material in the reactor was taken out and subjected to evaluation. FIG. 1 shows the results where it is seen that the peeling had progressed.

### Comparative Example 1

In this comparative example, expanded graphite was placed in a stirrer-attached reactor, and infrared heating was performed for two hours using a halogen lamp installed inside the reactor while stirring the content well. After the heating was ended, a solid material was taken out and subjected to evaluation. FIG. 2 shows the results where it is seen that the peeling had not progressed.

### Comparative Example 2

In this comparative example, 100 parts of water was added to 10 parts of natural graphite, and the mixture was placed in a heat-jacketed reactor. While stirring the content well, heat transfer oil heated at a temperature of 120°C was circulated in the jacket, so that the temperature was increased to 100°C. In a state where evaporated gas was cooled down and liquefied by a cooler attached to the upper portion of the reactor and was refluxed in the reactor, the reaction was caused to occur for one hour. After the reaction was ended, the temperature was cooled down to room temperature, and a solid material was taken out and subjected to evaluation. FIG. 2 shows the results where it is seen that the peeling had progressed only slightly.

### Comparative Example 3

In this comparative example, 5 parts of maleic anhydride was added to 10 parts of expanded graphite, and the mixture was well mixed, after which the mixture was placed in a stirrer-attached heat-jacketed reactor. While stirring the content well, heat transfer oil heated at a temperature of 120°C was circulated in the jacket so as to keep the internal temperature at 80°C, and, in this state, the reaction was caused to occur for one hour. After the reaction was ended, the temperature was cooled down to room temperature, and a solid material was taken out and subjected to evaluation. FIG. 2 shows the results where it is seen that the peeling had not progressed, and the entire material formed a large aggregate.

### Comparative Example 4

In this comparative example, 100 parts of toluene was added to 10 parts of expanded graphite, and the mixture was well mixed, after which the mixture was placed in a stirrer-attached heat-jacketed reactor. While stirring the content well, heat transfer oil heated at a temperature of 130°C was circulated in the jacket so as to keep the internal temperature at 110°C, and, in this state, the reaction was caused to occur for 30 minutes. After the reaction was ended, the temperature was cooled down to room temperature, and a solid material was taken out and subjected to evaluation. FIG. 2 shows the results where it is seen that the peeling had progressed only slightly.

### Comparative Example 5

In this comparative example, in a state where expanded graphite was allowed to stand, microwave irradiation at 2450 MHz was performed from above at 500 W for 20 minutes. A thermometer inserted between graphite layers indicated that the temperature between the layers was 220°C. After 20 minutes, it was seen that a material taken out of the reactor formed a large aggregate.

### Comparative Example 6

In this comparative example, 10 parts of expanded graphite, 20 parts of p-xylene, and 1 part of maleic anhydride were well mixed, and the mixture was placed in a stirrer-attached reactor. The pressure inside the reactor was increased to 0.3 MPa, using N₂ gas. Then, microwave irradiation at 2450 MHz was performed, so that the internal temperature of the reactor was increased to 190°C. The reaction was caused to occur for 30 minutes while keeping the temperature at 190°C. The temperature was further increased to 195°C, and the reaction was caused to occur for five minutes. Inside the reactor, bubbles were actively generated. p-Xylene at 0.3 MPa has a boiling point of near 185°C, and, furthermore, bubbles were actively generated, which means that the solvent located between layers of the carbon material was gasified. At that time, part of p-xylene was gasified, and thus it was taken out of the reactor via a cooling tube attached to the upper portion of the reactor. Then, the temperature was cooled down to room temperature, and a solid material in the reactor was taken out and subjected to evaluation. FIG. 2 shows the results where it is seen that the peeling had progressed only slightly.

### Comparative Example 7

In this comparative example, 10 parts of expanded graphite and 100 parts of mixed xylene were well mixed, and the mixture was placed in a stirrer-attached reactor. Microwave irradiation at 2450 MHz was performed at 4.5 W for 10 minutes, so that the temperature was increased from room temperature to 140°C. After the temperature reached 140°C, microwave irradiation was performed for another 10 minutes so as to keep the internal temperature at 140°C. Then, 10 parts of maleic anhydride was added, and the mixture was well stirred, after which microwave irradiation was performed for another 0.5 hours at an internal temperature of 140°C. During this treatment, a large amount of bubbles were generated. The mixed xylene has a boiling point of about 136°C, and, furthermore, a large amount of bubbles were generated, which means that the solvent located between layers of the carbon material was gasified. Although cooling down was performed by a cooling tube attached to the upper portion of the reactor, 50 parts of mixed xylene were evaporated out of the reactor. Then, the temperature was cooled down to room temperature, and a solid material in the reactor was taken out and subjected to evaluation. FIG. 2 shows the results where it is seen that the peeling had progressed only slightly. Note that the mixed xylene used in this comparative example was the same as that in Example 7.

### Comparative Example 8

In this comparative example, 40 parts of expanded graphite and 100 parts of mixed xylene were well mixed, and the mixture was placed in a stirrer-attached reactor. Microwave irradiation at 2450 MHz was performed at 1.5 W for one minute, so that the temperature was increased from room temperature to 30°C. After the temperature reached 30°C, microwave irradiation was performed for another five minutes so as to keep the internal temperature at 30°C. Then, 10 parts of maleic anhydride was added, and the mixture was well stirred, after which microwave irradiation was performed for another 10 minutes at an internal temperature of 30°C. During this treatment, generation of bubbles was not seen. Then, the temperature was cooled down to room temperature, and a solid material in the reactor was taken out and subjected to evaluation. FIG. 2 shows the results where it is seen that the peeling had not progressed. Note that the mixed xylene used in this comparative example was the same as that in Example 7.

FIG. 3 is a graph showing the results (indicated by ◆) of Examples 7 to 10 and Comparative Examples 7 and 8 using the mixed xylene and maleic anhydride, and the results (indicated by ×) of Examples 2, 5, and 6 and Comparative Example 6 using xylene and maleic anhydride. In FIG. 3, the results of Example 5 and Comparative Example 6 are plotted at positions corresponding to the highest temperature in the temperature range. The mixed xylene has a boiling point of about 136°C, and, furthermore, a large amount of bubbles were generated in Comparative Example 7, which means that the mixed xylene that had entered gaps between layers of the carbon material was gasified at 140°C but was not gasified at 130°C. p-Xylene at 0.3 MPa has a boiling point of near 185°C, and, furthermore, bubbles were actively generated in Comparative Example 6, which means that xylene that had entered gaps between layers of the carbon material was gasified at 190 to 195°C but was not gasified at 150°C. Furthermore, the average thickness (500 nm) after peeling of Comparative Example 7 was significantly larger than any of the average thicknesses (10 nm to 120 nm) after peeling of Examples 7 to 10, and, furthermore, the average thickness (500 nm) after peeling of Comparative Example 6 was significantly larger than any of the average thicknesses (30 nm to 70 nm) after peeling of Examples 2, 5, and 6, which means that, in order to peel a thinner flaky carbon material, it is necessary to perform heating within the range where the non-ionic solvent that has entered gaps between layers of the carbon material is not gasified. Assuming that the mixed xylene has a boiling point of 136°C, in Example 10, heating was performed in such a manner that the measured temperature of the solvent was at least 5°C lower than the boiling point of the solvent. Accordingly, it seems that, if the heating is performed in such a manner that the measured temperature is at least 5°C lower than the boiling point of the solvent, the solvent that is in contact with the carbon material can be prevented from being gasified. It is seen from FIG. 3 that a thinner flaky carbon material can be peeled at a higher temperature in the temperature range lower than the equilibrium temperature (120 to 130°C) of maleic anhydride, and a thinner flaky carbon material can be peeled at a lower temperature in the temperature range higher than the equilibrium temperature. Accordingly, it is seen that peeling is preferably performed at the equilibrium temperature.

The average thicknesses after peeling in Examples 1 and 3 in which the compound was not added were significantly larger than those of other examples in which the compound was added. As a result, it is seen a thinner material can be peeled in the case of adding the compound. A comparison between Examples 11 to 15 in which maleic anhydride was added and Example 16 in which maleic anhydride was not added shows that the average thickness after peeling is smaller in the case of adding maleic anhydride. It is seen from Examples 11 to 15 that, in order to peel a thinner flaky carbon material, it is preferable to add maleic anhydride in an amount smaller than 60 parts by weight, and to add maleic anhydride in an amount larger than 10 parts by weight, with respect to 100 parts by weight of carbon material.

Furthermore, in Examples 2, 4 to 15 in which the compound was added to the non-ionic solvent, new peaks appeared in the infrared spectrum of the flaky carbon material, and thus it is seen that the compound was bonded to the carbon material. The peaks that newly appeared had different peak wavenumbers between Examples 2 and 5 to 15, and Example 4, because the types of compounds bonded to the carbon material were different.

Furthermore, it is seen from Comparative Examples 1 to 4 that peeling is not facilitated without performing microwave irradiation. It is seen from Comparative Example 5 that peeling does not occur even with microwave irradiation if there is no solvent.

The present invention is not limited to the foregoing examples. Various modifications are possible within the scope of the present invention.

### Industrial Applicability

The flaky carbon material obtained by the method for producing a flaky carbon material according to the present invention can be used, for example, as a composite material with plastic, for the application as a conductive material, a dielectric material, an electromagnetic wave-absorbing material, or a thermoelectric material, or as a material for improving the mechanical strength characteristics of plastic or the like.

## Claims

1. A method for producing a flaky carbon material, comprising:
a step of peeling a flaky carbon material, by irradiating, with microwaves, a carbon material having a layered structure in non-ionic solvent, so as to heat the carbon material in such a manner that the non-ionic solvent that is in contact with the carbon material is not gasified, thereby increasing spacing between layers of the carbon material,
wherein, in the step of peeling a flaky carbon material, a compound is bonded to an end of the layered structure of the carbon material,
wherein the compound and the end of the layered structure of the carbon material are bonded to each other through Diels-Alder reaction,
wherein the compound is at least one compound selected from the group consisting of maleic anhydride, tetracyanoethylene, 2,3-dimethoxy-1,3-butadiene, 9-methylanthracene, quinodimethane, 5,6-bismethylene-1,3-cyclohexanediene, and 3,6-bismethylene-1,4-cyclohexadiene,
wherein, in the step of peeling a flaky carbon material, the carbon material is heated in such a manner that a temperature of the non-ionic solvent that is in contact with the carbon material is lower than a boiling point of the non-ionic solvent

2. The method for producing a flaky carbon material according to claim 1, wherein an amount of the compound that is mixed with the non-ionic solvent is 0.01 parts by weight or more and 60 parts by weight or less with respect to 100 parts by weight of the carbon material.

3. The method for producing a flaky carbon material according to claim 1 or 2, wherein, in the step of peeling a flaky carbon material, the carbon material is heated in such a manner that a temperature of the non-ionic solvent at a measurement position is at least 5°C lower than the boiling point of the non-ionic solvent.

4. The method for producing a flaky carbon material according to any one of claims 1 to 3, wherein the non-ionic solvent contains cyclic hydrocarbon solvent or cyclic hydrocarbon derivative solvent.

## Patentansprüche

1. Verfahren zur Herstellung eines flockigen Kohlenstoffmaterials, umfassend:
einen Schritt des Schälens eines schuppigen Kohlenstoffmaterials durch Bestrahlung eines Kohlenstoffmaterials mit einer Schichtstruktur in nichtionischem Lösungsmittel mit Mikrowellen, um das Kohlenstoffmaterial so zu erwärmen, dass das nichtionische Lösungsmittel, das mit dem Kohlenstoffmaterial in Kontakt steht, nicht vergast wird, wodurch der Abstand zwischen den Schichten des Kohlenstoffmaterials vergrößert wird,
wobei in dem Schritt des Schälens eines schuppigen Kohlenstoffmaterials eine Verbindung an ein Ende der geschichteten Struktur des Kohlenstoffmaterials gebunden wird,
wobei die Verbindung und das Ende der Schichtstruktur des Kohlenstoffmaterials durch Diels-Alder-Reaktion miteinander verbunden sind,
wobei die Verbindung mindestens eine Verbindung ist, ausgewählt aus der Gruppe bestehend aus Maleinsäureanhydrid, Tetracyanoethylen, 2,3-Dimethoxy-1,3-butadien, 9-Methylanthracen, Quinodimethan, 5,6-Bismethylen-1,3-cyclohexandien und 3,6-Bismethylen-1,4-cyclohexadien,
wobei in dem Schritt des Schälens eines schuppigen Kohlenstoffmaterials das Kohlenstoffmaterial so erwärmt wird, dass eine Temperatur des nichtionischen Lösungsmittels, das mit dem Kohlenstoffmaterial in Kontakt steht, niedriger ist als ein Siedepunkt des nichtionischen Lösungsmittels.

2. Verfahren zur Herstellung eines flockigen Kohlenstoffmaterials nach Anspruch 1, worin eine Menge der Verbindung, die mit dem nichtionischen Lösungsmittel gemischt wird, 0,01 Gewichtsteile oder mehr und 60 Gewichtsteile oder weniger in Bezug auf 100 Gewichtsteile des Kohlenstoffmaterials beträgt.

3. Verfahren zur Herstellung eines schuppenförmigen Kohlenstoffmaterials nach Anspruch 1, wobei im Schritt des Schälens eines schuppenförmigen Kohlenstoffmaterials das Kohlenstoffmaterial so erwärmt wird, dass eine Temperatur des nichtionischen Lösungsmittels an einer Messstelle mindestens 5C niedriger ist als der Siedepunkt des nichtionischen Lösungsmittels.

4. Verfahren zur Herstellung eines schuppenförmigen Kohlenstoffmaterials nach einem der Ansprüche 1 bis 3, worin das nichtionische Lösungsmittel cyclisches Kohlenwasserstofflösungsmittel oder Lösungsmittel eines cyclischen Kohlenwasserstoffderivats enthält.

## Revendications

1. Un procédé pour produire un matériau en carbone feuilleté, comprenant :
une étape de pelage d'un matériau en carbone feuilleté, par irradiation, par des micro-ondes, d'un matériau en carbone ayant une structure en couches dans un solvant non ionique, de manière à chauffer le matériau en carbone de telle sorte que le solvant non ionique qui est en contact avec le matériau en carbone ne soit pas gazéifié, augmentant ainsi l'espacement entre les couches du matériau en carbone ;
dans l'étape de pelage d'un matériau en carbone feuilleté, un composé est lié à une extrémité de la structure en couches du matériau en carbone,
le composé et l'extrémité de la structure en couches du matériau en carbone étant liés entre eux par une réaction de Diels-Alder,
le composé étant au moins un composé choisi dans le groupe constitué par l'anhydride maléique, le tétracyanoéthylène, le 2,3-diméthoxy-1,3-butadiène, le 9-méthylanthracène, le quinodiméthane, le 5,6-bisméthylène-1,3-cyclohexanediènee et le 3,6-bisméthylène-1,4-cyclohexadiène ;
dans l'étape de pelage d'un matériau en carbone feuilleté, le matériau en carbone est chauffé de telle manière qu'une température du solvant non ionique qui est en contact avec le matériau en carbone soit inférieure à un point d'ébullition du solvant non ionique.

2. Le procédé pour produire un matériau en carbone feuilleté selon la revendication 1, dans lequel une quantité du composé qui est mélangé avec le solvant non ionique est de 0,01 partie en poids ou plus et de 60 parties en poids ou moins par rapport à 100 parties en poids du matériau en carbone.

3. Le procédé pour produire un matériau en carbone feuilleté selon la revendication 1 ou la revendication 2, dans lequel, dans l'étape de pelage d'un matériau en carbone feuilleté, le matériau en carbone est chauffé de telle manière qu'une température du solvant non ionique à une position de mesure soit au moins 5°C inférieure au point d'ébullition du solvant non ionique.

4. Le procédé pour produire un matériau en carbone feuilleté selon l'une quelconque des revendications 1 à 3, dans lequel le solvant non ionique contient un solvant hydrocarboné cyclique ou un solvant dérivé hydrocarboné cyclique.
